# FASCICULE DE BREVET EUROPEEN

(11) **EP 2 663 873 B1**
(45) Date de publication et mention de la délivrance du brevet: **28.06.2017**
(21) Numéro de dépôt: 12705322.1
(22) Date de dépôt: 12.01.2012
(51) Int. Cl.: G01S 1/02, G01S 1/08, G01S 1/68, G01C 21/20

(54) **GUIDAGE PAR FOCALISATION RADIO**
LENKUNG DURCH RADIOFOKUSSIERUNG
GUIDING BY RADIO FOCUSING

(30) Priorité: 14.01.2011 FR 1150328
(43) Date de publication de la demande: 20.11.2013
(73) Titulaire: Orange, 75015 Paris (FR)
(72) Inventeur: PHAN HUY, Dinh Thuy, F-75004 Paris (FR); MALHOUROUX GAFFET, Nadine, F-90350 Evette Salbert (FR)
(86) Numéro de dépôt international: PCT/FR2012/050075
(87) Numéro de publication internationale: WO 2012/095609

(56) Documents cités:
- US-A1- 2002 119 791
- WALKER S ET AL: "Synchronized time-reversal focusing with application to remote imaging from a distant virtual source array", THE JOURNAL OF THE ACOUSTICAL SOCIETY OF AMERICA, AMERICAN INSTITUTE OF PHYSICS FOR THE ACOUSTICAL SOCIETY OF AMERICA, NEW YORK, NY, US, vol. 125, no. 6, 1 juin 2009 (2009-06-01), pages 3828-3834, XP012123327, ISSN: 0001-4966, DOI: 10.1121/1.3117374
- ALBERT FANNJIANG: "Information transfer in disordered media by broadband time-reversal: stability, resolution and capacity; Broadband time reversal communications", NONLINEARITY, INSTITUTE OF PHYSICS PUBLISHING, BRISTOL, GB, vol. 19, no. 10, 1 octobre 2006 (2006-10-01), pages 2425-2439, XP020100530, ISSN: 0951-7715, DOI: 10.1088/0951-7715/19/10/008

## Description

L'invention se rapporte au domaine de la navigation, par exemple pédestre ou automobile, guidée par signaux radio.

Certains procédés de guidage connus reposent sur l'association de deux techniques :
- la création d'un plan ou d'une carte géographique, et
- la localisation géographique de l'usager.
Ainsi, un tel procédé est mis en oeuvre dans le système de guidage par satellite connu sous le nom de GPS (initiales des mots anglais « *Global Positioning System* » signifiant « Système de Positionnement Mondial »).

Les inconvénients des techniques précitées sont les suivants :
- la cartographie d'une zone complexe telle que l'intérieur d'un bâtiment est compliquée à mettre en oeuvre, et
- la localisation d'un utilisateur en milieu complexe tel qu'un pâté de maisons ou l'intérieur d'un bâtiment est compliquée à mettre en oeuvre, notamment en raison des réflexions multiples et des effets d'ombre affectant les ondes électromagnétiques utilisées pour cette localisation.

On connaît également, sur la base de la demande de brevet US 2002/11979, un procédé de guidage d'un utilisateur (tel qu'un piéton ou un automobiliste) vers une destination présélectionnée. Pour ce faire, un réseau de gestion (« *LFS network* ») détermine, sur la base de cette présélection (« *target code* ») une série d'émetteurs radio fixes (« *Local Fixed Signal Sites* », ou LFS) parmi un ensemble de tels émetteurs, de telle manière que l'utilisateur se déplace d'émetteur en émetteur jusqu'à sa destination. L'utilisateur se dirige vers chaque émetteur successif en consultant un récepteur radio (« *tracking unit* ») qui lui indique, de manière connue, la direction à suivre.

Ainsi, selon ce procédé connu, chaque trajet de l'utilisateur est matérialisé par une série d'émetteurs servant de balises. Compte tenu de la complexité, mentionnée ci-dessus, du milieu concerné, ces émetteurs doivent être proches les uns des autres de manière à ce que la distance entre l'utilisateur et chaque émetteur successif soit faible ; de plus, il faut prévoir suffisamment d'émetteurs pour pouvoir mettre en place des trajets différents en fonction de destinations différentes. Ce procédé a donc pour inconvénient de requérir l'installation d'un ensemble très dense d'émetteurs fixes reliés en réseau.

La présente invention concerne donc un procédé de guidage par focalisation radio selon la revendication 1.

Ainsi, selon l'invention, pour chaque trajet, dans un certain environnement, le long duquel on souhaite guider un visiteur, on met en place une série de « balises spatio-temporelles » successives, qui « matérialisent » ce trajet. Comme mentionné succinctement ci-dessus, ces balises résultent de la superposition de signaux radio émis par un certain nombre de dispositifs communicants ER*ᵢ*. On notera que, pour ce faire, les dispositifs ER*ᵢ* peuvent, a priori, être positionnés n'importe où dans ledit environnement, et/ou à proximité dudit environnement ; l'invention permet, avantageusement, de mettre en place des trajets différents au moyen de séries géographiquement différentes de balises spatio-temporelles, sans pour autant avoir à déplacer les dispositifs ER*ᵢ*.

Grâce à ces dispositions, on dispose d'un système de navigation peu complexe qui ne nécessite ni localisation de l'usager guidé, ni cartographie de la zone dans laquelle l'usager est guidé, ni un grand nombre d'émetteurs radio.

L'invention telle qu'exposée succinctement ci-dessus comprend deux variantes.

Selon une première variante, les déplacements successifs du visiteur sont libellés successivement dans l'ordre croissant du numéro *k*, de *k*=1 à *k*=*k*_{dernier}. Grâce à ces dispositions, un guide, qui connaît le trajet, peut guider un futur visiteur qui ne connaît pas ce trajet.

Selon une deuxième variante, les déplacements successifs du visiteur sont libellés successivement dans l'ordre décroissant du numéro *k ,* de *k*=*k*_{dernier} à *k*=1. Grâce à ces dispositions, le guide et le visiteur peuvent être la même personne : ainsi, un visiteur qui n'est pas familier avec un certain environnement peut revenir à son point de départ en étant guidé le long d'un trajet qu'il a parcouru précédemment en sens inverse.

Selon des caractéristiques particulières, chaque fois que le visiteur rejoint une balise spatio-temporelle de numéro *k*, où *k*=1,2,...,*k*_{dernier} (respectivement, *k*=*k*_{dernier},*k*_{dernier}-1,...,1), ledit dispositif Evisiteur le signale à un dispositif communicant central Econtrôleur, qui ordonne auxdits dispositifs ER*ᵢ* d'arrêter l'émission de leur signal respectif de numéro *k*, et qui ordonne aux dispositifs ER*ᵢ*, sauf lorsque *k*=*k*_{dernier} (respectivement, *k*=1), de commencer l'émission de leur signal respectif de numéro (*k*+1) (respectivement, (*k-*1)).

Grâce à ces dispositions, le visiteur qui a atteint la balise spatio-temporelle de numéro *k* est ensuite guidé vers la balise spatio-temporelle suivante. De la sorte, le visiteur est *in fine* commodément guidé tout le long dudit trajet.

Grâce à ces dispositions, le guide peut commodément enregistrer, à l'intention d'un futur visiteur, un certain trajet au sein dudit environnement.

Corrélativement, l'invention concerne un système de guidage par focalisation radio selon la revendication 3.

Selon des caractéristiques particulières, ledit système de guidage par focalisation radio comprend en outre un dispositif communicant Econtrôleur comportant des moyens pour :
- recevoir de la part dudit dispositif communicant Evisiteur, pour *k*=1,2,...,*k*_{dernier} (respectivement, *k*=*k*_{dernier},*k*_{dernier}-1,...,1), un message lui indiquant que l'intensité d'un signal de numéro *k* mesuré par ledit dispositif communicant Evisiteur a atteint un niveau prédéterminé,
- ordonner, pour *k* =1,2,...,*k*_{dernier} (respectivement, *k*=*k*_{dernier}, *k*_{dernier}-1,...,1), auxdits dispositifs communicants respectifs ER*ᵢ* d'arrêter l'émission d'un signal respectif de numéro *k*, et
- ordonner, pour *k*=1,2,...,*k*_{dernier}-1 (respectivement, *k*=*k*_{dernier}, *k*_{dernier}-1,...,2), auxdits dispositifs communicants respectifs ER*ᵢ* de commencer l'émission d'un signal respectif de numéro (*k*+1) (respectivement, (*k*-1)).

On notera que l'on pourra réaliser l'un quelconque des dispositifs communicants succinctement exposés ci-dessus dans le contexte d'un circuit électronique.

Les avantages offerts par ces systèmes sont essentiellement les mêmes que ceux offerts par les procédés corrélatifs succinctement exposés ci-dessus.

L'invention vise également un programme d'ordinateur téléchargeable depuis un réseau de communication et/ou stocké sur un support lisible par ordinateur et/ou exécutable par un microprocesseur. Ce programme d'ordinateur est remarquable en ce qu'il comprend des instructions pour l'exécution des étapes de l'un quelconque des procédés de guidage par focalisation radio succinctement exposés ci-dessus, lorsqu'il est exécuté sur un ordinateur.

Les avantages offerts par ces dispositifs et ce programme d'ordinateur sont essentiellement les mêmes que ceux offerts par lesdits procédés.

D'autres aspects et avantages de l'invention apparaîtront à la lecture de la description détaillée ci-dessous de modes de réalisation particuliers, donnés à titre d'exemples non limitatifs. La description se réfère aux dessins qui l'accompagnent, dans lesquels :
- la figure 1 représente schématiquement, en fonction du temps, l'intensité du signal reçu par le dispositif Evisiteur, lorsque le visiteur effectue un balayage manuel,
- la figure 2 représente le mouvement de balayage manuel effectué par le visiteur, lorsque le dispositif Evisiteur est doté d'une antenne non directive,
- la figure 3 est un exemple de graphe montrant l'intensité du signal reçu par le dispositif Evisiteur en fonction de sa position, dans le cas représenté sur la figure 2,
- la figure 4 représente le mouvement de balayage manuel effectué par le visiteur, lorsque le dispositif Evisiteur est doté d'une antenne directive, et
- la figure 5 représente un balayage automatique, lorsque le dispositif Evisiteur est muni de plusieurs capteurs.

On va décrire à présent un système de guidage par focalisation radio selon un mode de réalisation de l'invention.

Ce système comprend les dispositifs suivants :
- un dispositif communicant Evisiteur, utilisé par un utilisateur du système dit « visiteur »,
- un dispositif communicant Eguide, utilisé par un utilisateur du système dit « guide »,
- un réseau de dispositifs communicants ER*ᵢ*, où *i*=1,...,*N* et *N* ≥ 1, et
- un dispositif central Econtrôleur, apte à piloter les dispositifs ER*ᵢ*

Comme expliqué ci-dessus, le guide et le visiteur peuvent être des personnes distinctes, ou être la même personne.

Ledit dispositif communicant Evisiteur comprend des moyens pour :
- détecter un signal radio, et en mesurer l'intensité, et
- lorsque ladite intensité a atteint un niveau prédéterminé, envoyer un message correspondant audit dispositif communicant Econtrôleur.

Le dispositif communicant Econtrôleur comprend des moyens pour :
- recevoir de la part d'un dispositif communicant Evisiteur, pour *k* =1,2,...,*k*_{dernier} (respectivement, *k*=*k*_{dernier},*k*_{dernier}-1,...,1), un message lui indiquant que l'intensité d'un signal de numéro *k* mesuré par ledit dispositif communicant Evisiteur a atteint un niveau prédéterminé,
- ordonner, pour *k* =1,2,...,*k*_{dernier} (respectivement, *k*=*k*_{dernier}, *k*_{dernier}-1,...,1), auxdits dispositifs communicants respectifs ER*ᵢ* d'arrêter l'émission d'un signal respectif de numéro k, et
- ordonner, pour *k*=1,2,..., *k*_{dernier} -1 (respectivement, *k*=*k*_{dernier}, *k*_{dernier} -1,...,2), auxdits dispositifs communicants respectifs ER*ᵢ* de commencer l'émission d'un signal respectif de numéro (*k* +1) (respectivement, (*k*-1)).

Chaque dispositif communicant ER*ᵢ* peut enregistrer un signal radio émis par ledit dispositif communicant Eguide à condition d'être à portée radio de Eguide, et peut associer au signal reçu un numéro *k*, qui est un entier tel que 0 ≤ *k* ≤ *k*_{dernier}, où *k*_{dernier} est un paramètre entier dont la valeur est déterminée empiriquement comme décrit ci-dessous. En outre, chaque dispositif communicant ER*ᵢ* comporte des moyens pour émettre un signal respectif de numéro *k* obtenu par retournement temporel dudit signal reçu de numéro *k*.

On choisit un point de départ pour le trajet suivi par un futur visiteur ; il peut s'agir, par exemple, d'une position dans l'espace signalée par un panneau ou une marque au sol, ou d'un son, détectables par le visiteur.

L'invention comprend deux phases successives, à savoir une phase d'apprentissage, et une phase de guidage.

La phase d'apprentissage comprend les étapes suivantes.

Au cours d'une étape A0, le guide positionne Eguide au point de départ précité.

Au cours d'une étape A1, le guide actionne Eguide.

Au cours d'une étape A2, Eguide se synchronise avec Econtrôleur. A partir de ce moment, Eguide possède la même référence de temps que Econtrôleur et que tous les dispositifs ER*ᵢ* du réseau.

Au cours d'une étape A3, à partir d'un instant t0, Econtrôleur initialise le réseau en :
- assignant la valeur nulle au numéro *k*, et
- effaçant dans les ER*ᵢ* tous les enregistrements éventuels.

Au cours d'une étape A4, Econtrôleur envoie à Eguide un signal de départ, qui est reçu à un instant t₀+dt1.

Au cours d'une étape A5, Eguide envoie au guide un signal de départ, à un instant t₀+dt1+dt2. Le guide se met alors en mouvement.

Au cours d'une étape A6 :
- à chaque instant {t₀+k₀·T+*k*·T), où *k*₀ est une constante prédéterminée telle que *k*₀·T>(dt1+dt2), et T est une durée prédéterminée, Eguide émet un signal prédéterminé d'une durée d<T, et
- dans chaque intervalle de temps [t₀+*k*₀·T+*k*·T; t₀+*k*₀·T+(*k*+1). T], chaque ER*ᵢ* tente de détecter le signal émis par Eguide ; chaque ER*ᵢ* détectant un signal enregistre le signal respectif reçu et lui affecte le numéro *k*.

Cette étape A6 se poursuit ainsi dans le temps jusqu'à ce que, au cours d'une étape A7, le guide arrête son parcours et désactionne Eguide.

Enfin, au cours d'une étape A8, Econtrôleur affecte au paramètre *k*_{dernier} la valeur de *k* courante.

Quant à la phase de guidage, elle comprend, dans le cas où le guide et le visiteur sont des personnes distinctes, les étapes suivantes.

Au cours d'une étape B0, le visiteur positionne Evisiteur au point de départ défini dans la phase précédente et qui lui a été communiqué au préalable par le guide.

Au cours d'une étape B1, le visiteur actionne Evisiteur.

Au cours d'une étape B2, Evisiteur se synchronise avec Econtrôleur. A partir de ce moment, Evisiteur possède la même référence de temps que Econtrôleur et que tous les dispositifs ER*ᵢ*.

Econtrôleur configure alors dans les dispositifs ER*ᵢ* un paramètre « *k*_{contrôle} », auquel il donne la valeur initiale 1.

Au cours d'une étape B3a, Econtrôleur ordonne à chaque dispositif ER*ᵢ* de regarder s'il possède un enregistrement associé à un numéro égal à la valeur *k*_{contrôle} courante. Chaque dispositif ER*ᵢ* possédant un tel enregistrement le transmet, de manière répétée si nécessaire, après l'avoir retourné temporellement, créant ainsi par focalisation une source virtuelle qui constitue une balise spatio-temporelle.

La méthode de focalisation spatio-temporelle utilisée ici s'inspire de l'étude présentée dans l'article de C. Oestges, J. Hansen, S.M. Emami, A.D. Kim, G. Papanicolaou et A.J. Paulraj intitulé « Time Reversal Techniques for Broadband Wireless Communication Systems », 2004, accessible sur le site Internet : http://wwwold.ftw.at/ftw/events/telekommu nikationsforum/SS2005/SS05docs/050415paper.pdf. On rappelle que le Retournement Temporel est une technique (à l'origine utilisée dans le domaine des ondes acoustiques) qui repose sur l'invariance par renversement du temps de l'équation d'onde ; ainsi, une onde temporellement inversée se propage comme une onde directe qui remonterait le temps. Lorsqu'une onde émise par un point d'origine se propage dans un milieu de propagation, et qu'une partie de cette onde reçue par un point destinataire (en l'occurrence, un dispositif ER*ᵢ*) est retournée temporellement avant d'être renvoyée dans le milieu de propagation, l'onde converge vers le point d'origine en y formant une tache focale ; le signal arrivant au point d'origine est quasi-identique dans sa forme au signal d'origine émis par le point d'origine.

Cette transmission se poursuit tant que Econtrôleur n'a pas reçu de la part de Evisiteur un message correspondant au fait que le visiteur a atteint la balise spatio-temporelle de numéro *k*_{contrôle}.

Lorsque Econtrôleur reçoit de la part de Evisiteur un message lui indiquant que le visiteur a atteint la balise spatio-temporelle (cf. étape B3b ci-dessous), il incrémente *k*_{contrôle}, et réitère l'étape B3a.

Pendant tout le déroulement de l'étape B3a, Evisiteur met en oeuvre une étape B3b.

Evisiteur tente de détecter un signal radio en continu. Si un signal est détecté, le visiteur détermine la direction d'où vient ce signal à partir d'une procédure simple (dont divers modes de réalisation seront fournis ci-dessous) de détection de l'intensité maximale du signal.

Le visiteur se déplace alors dans la direction trouvée, l'intensité du signal reçu par Evisiteur augmentant en conséquence.

Lorsque l'intensité du signal reçu a atteint un niveau prédéterminé, on considère que le visiteur a atteint la balise spatio-temporelle, et Evisiteur envoie un message correspondant à Econtrôleur.

Ces étapes B3a et B3b sont réitérées jusqu'à ce que Econtrôleur constate que *k*_{contrôle} = *k*_{dernier}.

Au cours d'une étape B4, Econtrôleur signale à Evisiteur que la destination est atteinte.

Au cours d'une étape B5, Evisiteur indique au visiteur que la destination est atteinte.

Enfin, au cours d'une étape B6, le visiteur désactionne Evisiteur.

Dans le cas où le guide et le visiteur sont la même personne, la phase de guidage comprend les mêmes étapes que ci-dessus, si ce n'est que l'on utilise successivement des valeurs décroissantes du numéro k, de *k*=*k*_{dernier} à *k*=1, au lieu de valeurs croissantes.

L'étape B3b ci-dessus repose sur le fait que l'on crée un signal radio provenant d'une balise spatio-temporelle, et dont l'intensité est donc maximale dans la direction de cette balise spatio-temporelle. On notera que, pour un fonctionnement optimal de la détection d'une balise spatio-temporelle, il est préférable que Evisiteur soit constamment situé dans une tache focale correspondant à la balise courante ; il en résulte que toute paire de balises successives doit être telle que les balises soient suffisamment proches l'une de l'autre ; plus précisément, la distance entre deux balises successives doit, de préférence, être du même ordre de grandeur que la longueur d'onde des signaux radio. La valeur optimale de la durée T entre les enregistrements de deux balises successives en résulte, compte tenu de la vitesse de déplacement du guide.

On va décrire à présent divers modes de réalisation de l'étape B3b, dans lesquels on décrit une méthode de détection utilisable par le visiteur pour déterminer dans quelle direction se trouve la balise spatio-temporelle.

Selon un premier mode de réalisation de la méthode de détection, le visiteur effectue un balayage manuel, comprenant une phase 1 « aller » et une phase 2 « retour ».

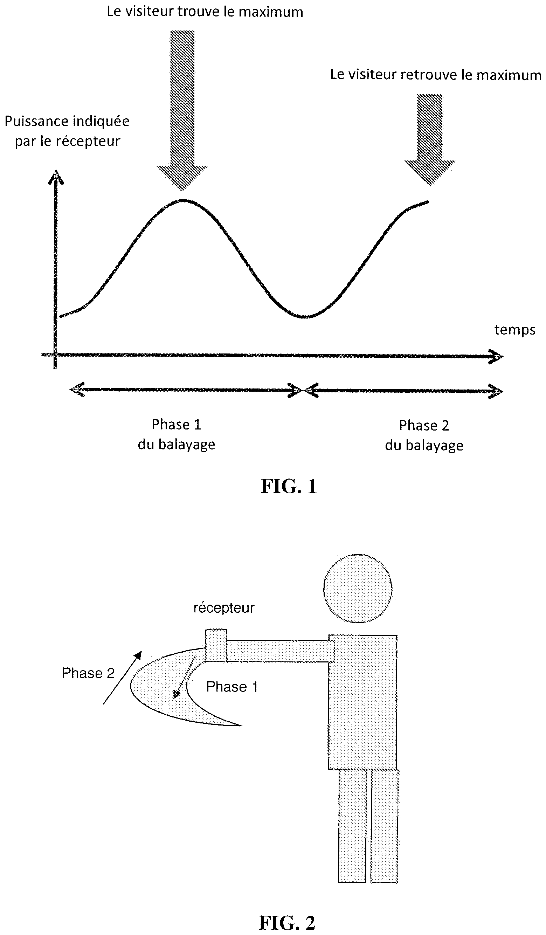

Evisiteur affiche l'intensité du signal reçu de la source virtuelle. Le visiteur cherche alors la direction dans laquelle l'intensité est maximale, comme représenté sur la **figure 1** : c'est la direction dans laquelle se trouve la source.

Pour le confort du visiteur, on peut prévoir qu'Evisiteur est capable, automatiquement, de déterminer à partir des différentes mesures si le maximum est atteint, et de l'indiquer au visiteur par un voyant lumineux.

Selon une première variante, représentée sur la **figure 2**, Evisiteur est un récepteur doté d'une antenne non directive.

Il est à noter que cette variante nécessite une forte focalisation.

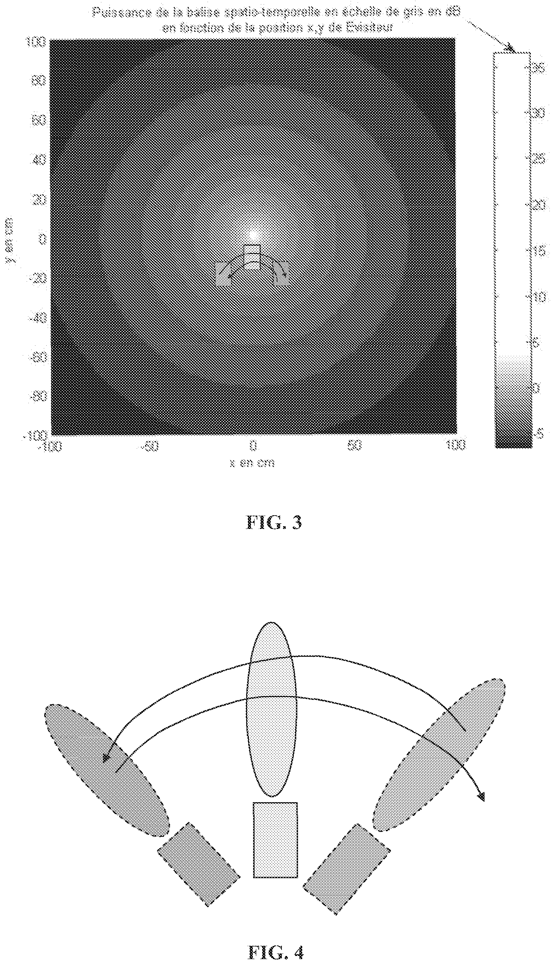

La **figure 3** est un exemple de graphe montrant, dans cette variante, l'intensité du signal reçu par Evisiteur en fonction de sa position.

Selon une deuxième variante du premier mode de réalisation, représentée sur la **figure 4**, Evisiteur est un récepteur doté, cette fois, d'une antenne directive.

La méthode de détection dans ce cas comprend les mêmes étapes que dans la première variante, à une différence près : Evisiteur ne reçoit que dans une seule direction, donc le visiteur doit tourner Evisiteur afin de trouver la direction dans laquelle se trouve la source.

Il est à noter que cette deuxième variante nécessite une focalisation moins forte que la première variante.

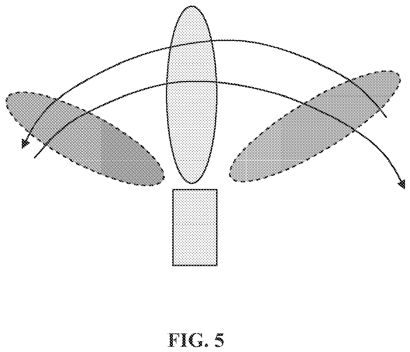

Selon un deuxième mode de réalisation de la méthode de détection, représenté sur la **figure 5**, le visiteur bénéficie d'un balayage automatique, et Evisiteur est muni de plusieurs capteurs.

Dans ce cas, Evisiteur peut effectuer des mesures simultanées. Evisiteur applique des coefficients à la réception, en bande de base, sur ses capteurs, de manière à former plusieurs faisceaux. Evisiteur détermine alors le faisceau recevant la plus grande intensité, sans nécessiter de mouvement de balayage de la part du visiteur. Evisiteur indique ensuite au visiteur la direction de ce faisceau d'intensité maximale.

Comme indiqué ci-dessus, la présente invention concerne également un système informatique mettant en oeuvre le procédé de guidage par focalisation radio décrit ci-dessus. Ce système informatique comporte de manière classique une unité centrale de traitement commandant par des signaux une mémoire, ainsi qu'une unité d'entrée et une unité de sortie.

De plus, ce système informatique peut être utilisé pour exécuter un programme d'ordinateur comportant des instructions pour la mise en oeuvre du procédé de guidage par focalisation radio selon l'invention.

En effet, l'invention vise aussi un programme d'ordinateur téléchargeable depuis un réseau de communication comprenant des instructions pour l'exécution des étapes d'un procédé de guidage par focalisation radio selon l'invention, lorsqu'il est exécuté sur un ordinateur. Ce programme d'ordinateur peut être stocké sur un support lisible par ordinateur et peut être exécutable par un microprocesseur.

Ce programme peut utiliser n'importe quel langage de programmation, et se présenter en tant que code source, code objet, ou code intermédiaire entre code source et code objet, sous une forme partiellement compilée ou sous toute autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une clé USB (« *USB flash drive* » en anglais) ou un disque dur.

D'autre part, le support d'informations peut être un support transmissible tel qu'un signal électrique ou optique, qui peut être acheminé via un câble électrique ou optique, par radio ou par d'autres moyens. Le programme d'ordinateur selon l'invention peut être en particulier téléchargé sur un réseau de type Internet.

En variante, le support d'informations peut être un circuit intégré dans lequel le programme d'ordinateur est incorporé, le circuit étant adapté pour exécuter ou pour être utilisé dans l'exécution du procédé selon l'invention.

On notera pour terminer qu'aucune limitation n'est imposée concernant les techniques de transmission radio aptes à mettre en oeuvre l'invention. Les réseaux radio concernés peuvent être, par exemple :
- des réseaux mobiles (3GPP UMTS, HSPA, LTE, LTE-A, IEEE 802.16, Mobile WiMAX, 1xEVDV, et ainsi de suite), ou
- des réseaux fixes (WLAN, IEEE 802.11, et ainsi de suite).

## Revendications

1. Procédé de guidage par focalisation radio, comprenant les étapes suivantes :
a) une entité dite « visiteur » part d'un lieu prédéterminé, et se dirige vers une source radio de numéro *k* = 1, respectivement *k = k*_{dernier}, au moyen de l'observation de l'intensité de cette source de numéro *k* = 1, respectivement *k* = *k*_{dernier}, mesurée par un dispositif communicant Evisiteur porté par ledit visiteur, jusqu'à ce que le visiteur ait rejoint cette source de numéro *k =* 1 , respectivement *k* = *k*_{dernier}, et
b) ledit visiteur se dirige successivement, pour *k*=1,2,...,*k*_{dernier}-1, respectivement *k*=*k*_{dernier},*k*_{dernier} - 1,...,2, d'une source radio de numéro *k* vers une source radio de numéro (*k* + 1), respectivement (*k -* 1), au moyen de l'observation de l'intensité de cette source de numéro (*k* + 1), respectivement (*k -* 1), mesurée par ledit dispositif Evisiteur, jusqu'à ce que le visiteur ait rejoint cette source de numéro (*k* + 1), respectivement (*k -* 1),
**caractérisé en ce que** chacune desdites sources radio de numéro *k*, pour *k* = 1,...,*k*_{dernier}, est une source virtuelle, dite « balise-spatio-temporelle », produite par un signal respectif de numéro *k* ou la superposition de plusieurs signaux respectifs de numéro *k*, chacun de ces signaux étant émis par un dispositif communicant respectif ER*ᵢ*, où *i* = 1,...,*N* et *N* ≥ 1, lesdits dispositifs communicants ER*ᵢ* étant placés à divers endroits dans un environnement prédéterminé, ou au voisinage dudit environnement, et **en ce que** ledit signal respectif de numéro *k* résulte du retournement temporel d'un signal qui a été préalablement enregistré par au moins l'un desdits dispositifs ER*ᵢ* lors d'une phase d'apprentissage au cours de laquelle une entité, dite « guide », a traversé ledit environnement le long d'un certain trajet, munie d'un dispositif communicant Eguide émettant successivement un signal respectif de numéro *k* pour chaque valeur du numéro *k* allant de *k* = 1 à *k = k*_{dernier}.

2. Procédé de guidage selon la revendication 1, **caractérisé en ce que**, chaque fois que le visiteur rejoint une balise spatio-temporelle de numéro *k,* où *k*=1,...,*k*_{dernier}, respectivement *k*=*k*_{dernier},*k*_{dernier}-1...,1, ledit dispositif Evisiteur le signale à un dispositif communicant central Econtrôleur, qui ordonne auxdits dispositifs ER*ᵢ* d'arrêter l'émission de leur signal respectif de numéro *k*, et qui ordonne aux dispositifs ER*ᵢ*, sauf lorsque *k* = *k*_{dernier}, respectivement *k* = 1, de commencer l'émission de leur signal respectif de numéro *(k* + 1), respectivement (*k -* 1).

3. Système de guidage par focalisation radio, comprenant des dispositifs communicants ER*ᵢ*, où *i =* 1, *...,N* et *N ≥* 1, placés à divers endroits dans un environnement prédéterminé, ou au voisinage dudit environnement, et comportant chacun des moyens configurés pour émettre un signal respectif,
**caractérisé en ce qu'**il comprend en outre :
- au moins un dispositif communicant Evisiteur configuré pour mesurer l'intensité d'une source radio virtuelle, dite « balise-spatio-temporelle », produite par le signal respectif émis par un dispositif communicant ER*ᵢ* ou la superposition de plusieurs signaux respectifs émis par des dispositifs communicants ER*ᵢ*, et
- au moins un dispositif communicant Eguide comportant des moyens pour émettre un signal radio, chacun desdits dispositifs communicants ER*ᵢ* comportant en outre des moyens configurés pour recevoir,
enregistrer et retourner temporellement ledit signal radio émis par le dispositif communicant Eguide, afin d'engendrer ledit signal respectif émis par le dispositif communicant ER*ᵢ*.

4. Système de guidage par focalisation radio selon la revendication 3, **caractérisé en ce qu'**il comprend en outre un dispositif communicant Econtrôleur comportant des moyens configurés pour :
- recevoir de la part dudit dispositif communicant Evisiteur, pour *k* = 1,2,...,*k*_{dernier}, respectivement *k*=*k*_{dernier},*k*_{dernier}-1,...,1, un message lui indiquant que l'intensité d'un signal de numéro *k* mesuré par ledit dispositif communicant Evisiteur a atteint un niveau prédéterminé,
- ordonner, pour *k =* 1,2,...,*k*_{dernier}, respectivement *k* = *k*_{dernier},*k*_{dernier}-1,...,1, auxdits dispositifs communicants respectifs ER*ᵢ* d'arrêter l'émission d'un signal respectif de numéro *k*, et
- ordonner, pour *k =* 1,2,...,*k*_{dernier} - 1, respectivement *k* = *k*_{dernier},*k*_{dernier}-1,...,2, auxdits dispositifs communicants respectifs ER*ᵢ* de commencer l'émission d'un signal respectif de numéro (*k* + 1), respectivement, (*k* - 1).

5. Moyen de stockage de données inamovible, ou partiellement ou totalement amovible, comportant des instructions de code de programme informatique pour l'exécution des étapes d'un procédé de guidage par focalisation radio selon la revendication 1 ou la revendication lorsque le programme est exécuté sur un ordinateur

6. Programme d'ordinateur téléchargeable depuis un réseau de communication et/ou stocké sur un support lisible par ordinateur et/ou exécutable par un microprocesseur, **caractérisé en ce qu'**il comprend des instructions pour l'exécution des étapes d'un procédé de guidage par focalisation radio selon la revendication 1 ou la revendication 2, lorsqu'il est exécuté sur un ordinateur.

## Patentansprüche

1. Verfahren zur Lenkung durch Radiofokussierung, umfassend die folgenden Schritte:
a) eine Einheit, die "Besucher" genannt wird, startet von einer vorbestimmten Stelle und bewegt sich auf eine Funkquelle der Zahl *k* = 1 beziehungsweise *k* = *k*_{letzte} durch die Beobachtung der Intensität dieser Quelle der Zahl *k* = 1 beziehungsweise *k* = *k*_{letzte}, die durch eine kommunizierende Vorrichtung E_{Besucher} gemessen wird, die von dem Besucher getragen wird, zu, bis der Besucher diese Quelle der Zahl *k =* 1 beziehungsweise *k* = *k*_{letzte} erreicht hat, und
b) der Besucher bewegt sich nacheinander für *k* = 1, 2,..., *k*_{letzte} - 1 beziehungsweise *k* = *k*_{letzte},k_{letzte} - 1..., 2 von einer Funkquelle der Zahl *k* auf eine Funkquelle der Zahl (*k* + 1) beziehungsweise *(k* - 1) durch die Beobachtung der Intensität dieser Quelle der Zahl *(k* + 1) beziehungsweise (*k* - 1), die durch die Vorrichtung E_{Besucher} gemessen wird, zu, bis der Besucher diese Quelle der Zahl (*k* + 1) beziehungsweise *(k -* 1) erreicht hat,
**dadurch gekennzeichnet, dass** jede dieser Funkquellen der Zahl *k* für k = 1,..., *k*_{letzte} eine virtuelle Quelle ist, die "raum-zeitliche Markierung" genannt wird, die von einem jeweiligen Signal der Zahl *k* oder der Überlagerung von mehreren jeweiligen Signalen der Zahl *k* erzeugt wird, wobei jedes dieser Signale von einer jeweiligen kommunizierenden Vorrichtung ER*ᵢ* ausgesendet wird, wobei *i* = 1, ..., *N* und *N* ≥ 1 ist, wobei die kommunizierenden Vorrichtungen ER*ᵢ* an verschiedenen Stellen in einer vorbestimmten Umgebung oder in der Nähe der Umgebung angeordnet werden, und dadurch, dass das jeweilige Signal der Zahl *k* aus dem zeitlichen Zurücksenden eines Signals stammt, das zuvor von mindestens einer der Vorrichtungen ER*ᵢ* während einer Lernphase aufgezeichnet worden ist, während der eine Einheit, die "Lenkungseinheit" genannt wird, die mit einer kommunizierenden Vorrichtung E_{Lenkung} versehen ist, die nacheinander ein jeweiliges Signal der Zahl *k* für jeden Wert der Zahl *k* von *k* = 1 bis *k* = *k*_{letzte} aussendet, die Umgebung entlang eines bestimmten Pfades durchquert hat.

2. Verfahren zur Lenkung nach Anspruch 1, **dadurch gekennzeichnet, dass** jedes Mal, wenn der Besucher eine raum-zeitliche Markierung der Zahl *k* erreicht, wobei *k* = 1, ..., *k*_{letzte} beziehungsweise *k* = *k*_{letzte}, k_{letzte} - 1..., 1 ist, die Vorrichtung E_{Besucher} dies einer zentralen kommunizierenden Vorrichtung E_{Kontroller} signalisiert, die den Vorrichtungen ER*ᵢ* anordnet, das Aussenden ihres jeweiligen Signals der Zahl *k* zu beenden und die den Vorrichtungen ER*ᵢ* anordnet, außer wenn *k* = *k*_{letzte} beziehungsweise *k* = 1 ist, das Aussenden ihres jeweiligen Signals der Zahl *(k* + 1) beziehungsweise (*k -* 1) zu beginnen.

3. System zur Lenkung durch Radiofokussierung, umfassend kommunizierende Vorrichtungen ER*ᵢ*, wobei *i* = 1, ..., *N* und *N* ≥ 1 ist, die an verschiedenen Stellen in einer vorbestimmten Umgebung oder in der Nähe der Umgebung angeordnet sind und jeweils Mittel aufweisen, die konfiguriert sind, um ein jeweiliges Signal auszusenden, **dadurch gekennzeichnet, dass** es ferner Folgendes aufweist:
- mindestens eine kommunizierende Vorrichtung E_{Besucher}, die konfiguriert ist, um die Intensität einer virtuellen Funkquelle, die "raum-zeitliche Markierung" genannt wird, zu messen, die von dem jeweiligen Signal, das von einer kommunizierenden Vorrichtung ER*ᵢ* ausgesendet wird, oder der Überlagerung von mehreren jeweiligen Signalen, die von kommunizierenden Vorrichtungen ER*ᵢ* ausgesendet werden, erzeugt wird, und
- mindestens eine kommunizierende Vorrichtung E_{Lenkung}, die Mittel zum Aussenden eines Funksignals aufweist, wobei jede der kommunizierenden Vorrichtungen ER*ᵢ* ferner Mittel aufweist, die konfiguriert sind, um das Funksignal, das von der kommunizierenden Vorrichtung E_{Lenkung} ausgesendet wird, zu empfangen, aufzuzeichnen und zeitlich zurückzusenden, um das jeweilige Signal zu erzeugen, das von der kommunizierenden Vorrichtung ER*ᵢ* ausgesendet wird.

4. System zur Lenkung durch Radiofokussierung nach Anspruch 3, **dadurch gekennzeichnet, dass** es ferner eine kommunizierende Vorrichtung E_{Kontroller} aufweist, die Mittel aufweist, die konfiguriert sind, um:
- von der kommunizierenden Vorrichtung E_{Besucher} für *k* = 1, 2,..., *k*_{letzte} beziehungsweise *k* = *k*_{letzte}, *k*_{letzte} - 1, ..., 1 eine Nachricht zu empfangen, die ihr angibt, dass die Intensität eines Signals der Zahl k, das von der kommunizierenden Vorrichtung E_{Besucher} gemessen wird, ein vorbestimmtes Niveau erreicht hat,
- den jeweiligen kommunizierenden Vorrichtungen ER*ᵢ* für *k =* 1, 2,..., *k*_{letzte} beziehungsweise *k* = *k*_{letzte}, *k*_{letzte} - 1, ..., 1 anzuordnen, das Aussenden eines jeweiligen Signals der Zahl *k* zu beenden und
- den jeweiligen kommunizierenden Vorrichtungen ER*ᵢ* für *k* = 1, 2,..., *k*_{letzte} - 1 beziehungsweise *k* = *k*_{letzte}, *k*_{letzte} - 1, ..., 2 anzuordnen, das Aussenden eines jeweiligen Signals der Zahl *(k* + 1) beziehungsweise (*k* - 1) zu beginnen.

5. Datenspeichermedium, das nicht abnehmbar, teilweise oder vollständig abnehmbar ist, das Computerprogrammcodebefehle für die Ausführung der Schritte eines Verfahrens zur Lenkung durch Radiofokussierung nach Anspruch 1 oder Anspruch 2 aufweist, wenn das Programm auf einem Computer ausgeführt wird.

6. Computerprogramm, das von einem Kommunikationsnetz herunterladbar ist und/oder auf einem computerlesbaren Medium gespeichert ist und/oder von einem Mikroprozessor ausführbar ist, **dadurch gekennzeichnet, dass** es Befehle für die Ausführung der Schritte eines Verfahrens zur Lenkung durch Radiofokussierung nach Anspruch 1 oder Anspruch 2 aufweist, wenn es auf einem Computer ausgeführt wird.

## Claims

1. Radio-focus guiding method comprising the following steps:
a) an entity called a "visitor" starts from a preset location, and directs himself towards a radio source of number k = 1, respectively k = kₗₐₛₜ, by means of observation of the intensity of this source of number k = 1, respectively k = kₗₐₛₜ, measured by a communication device Evisitor borne by said visitor, until the visitor has reached this source of number k = 1, respectively k = kₗₐₛₜ; and
b) said visitor directs himself in succession, for k = 1, 2,..., kₗₐₛₜ-1, respectively k = kₗₐₛₜ, kₗₐₛₜ-1,...,2, from a radio source of number k to a radio source of number (k+1), respectively (k-1), by means of the observation of the intensity of this source of number (k+1), respectively (k-1), measured by said device Evisitor, until the visitor has reached this source of number (k+1), respectively (k-1);
**characterized in that** each of said radio sources of number k, for k = 1,...,kₗₐₛₜ, is a virtual source, called a "temporal-spatial-beacon", produced by a respective signal of number k or the superposition of a plurality of respective signals of number k, each of these signals being emitted by a respective communication device ERᵢ, where i = 1,...,N and N≥1, said communication devices ERᵢ being placed in various locations in a preset environment, or in the vicinity of said environment, and **in that** said respective signal of number k results from the time reversal of a signal that was recorded beforehand by at least one of said devices ERᵢ during a learning phase in which an entity, called a "guide", passed through said environment along a certain path, said guide being equipped with a communication device Eguide emitting in succession a respective signal of number k for each value of the number k ranging from k = 1 to k = kₗₐₛₜ.

2. Guiding method according to Claim 1, **characterized in that**, each time the visitor reaches a spatial-temporal beacon of number k, where k = 1,...,kₗₐₛₜ, respectively k = kₗₐₛₜ,kₗₐₛₜ-1,...,1, said device Evisitor signals it to a central communication device Econtroler, which orders said devices ERᵢ to stop emitting their respective signal of number k, and that orders the devices ERᵢ, except when k=kₗₐₛₜ, respectively k=1, to start emitting their respective signal of number (k+1), respectively (k-1).

3. Radio-focus guiding system comprising communication devices ERᵢ, where i = 1,...,N and N≥1, placed at various locations in a preset environment, or in the vicinity of said environment, and each including means configured to emit a respective signal; **characterized in that** it furthermore comprises:
- at least one communication device Evisitor configured to measure the intensity of a virtual radio source, called a "spatial-temporal-beacon", produced by the respective signal emitted by a communication device ERᵢ or the superposition of a plurality of respective signals emitted by communication devices and ERᵢ; and
- at least one communication device Eguide including means for emitting a radio signal, each of said communication devices ERᵢ furthermore including means configured to receive, record and time-reverse said radio signal emitted by the communication device Eguide, in order to generate said respective signal emitted by the communication device ERᵢ.

4. Radio-focus guiding system according to Claim 3, **characterized in that** it furthermore comprises a communication device Econtroler including means configured to:
- receive from said communication device Evisitor, for k = 1,2,..., kₗₐₛₜ, respectively k = kₗₐₛₜ,kₗₐₛₜ-1,...,1, a message indicating thereto that the intensity of a signal of number k measured by said communication device Evisitor has reached a preset level;
- order, for k = 1,2,...kₗₐₛₜ, respectively k = kₗₐₛₜ, kₗₐₛₜ-1,...,1, said respective communication devices ERᵢ to stop emitting a respective signal of number k; and
- order, for k = 1,2,..., kₗₐₛₜ-1, respectively k = kₗₐₛₜ, kₗₐₛₜ-1,...,2, said respective communication devices ERᵢ to start emitting a respective signal of number (k+1), respectively (k-1).

5. Irremovable, partially removable or completely removable data storage means including computer program code instructions for executing steps of a radio-focus guiding method according to Claim 1 or Claim 2 when the program is executed by a computer.

6. Computer program downloadable from a communication network and/or stored on a computer-readable medium and/or executable by a microprocessor, **characterized in that** it comprises instructions for executing steps of a radio-focus guiding method according to Claim 1 or Claim 2, when it is executed by a computer.
